# EUROPEAN PATENT APPLICATION

(11) **EP 2 163 597 A1**
(43) Date of publication of application: **17.03.2010**
(21) Application number: 08778971.5
(22) Date of filing: 25.06.2008
(51) Int. Cl.: C10J 3/18, B01J 19/12

(54) **METHOD AND APPARATUS FOR PLASMA GASIFICATIION OF CARBONIC MATERIAL BY MEANS OF MICROWAVE RADIATION**

(30) Priority: 06.07.2007 MX MX07008317
(71) Applicant: Aba Research, S. A. De C. V., Monterrey, Nuevo León (MX)
(72) Inventor: LEÓN SÁNCHEZ, Antonio, Nuevo León (MX)
(74) Representative: Elzaburu Marquez, Alberto
(86) International application number: PCT/MX2008/000081
(87) International publication number: WO 2009/008693

(57) **Abstract**

A method and apparatus for gasifying carbonic material in order to produce carbon monoxide and hydrogen; the method comprises the following steps: (a) providing carbonic material; (b) heating, by means of microwave radiation, the carbonic material provided until a plasma point cloud forms in the carbonic material; (c) causing the cloud of plasma points of carbonic material to react with superheated water vapour in order to produce a synthesis gas; and (d) purifying the produced synthesis gas by refeeding it through the cloud of plasma points in the carbonic material wherein it is broken up by microwave radiation of step (b) to achieve the generally complete transformation of the synthesis gas into carbon monoxide and hydrogen. Additionally the cloud of plasma points reacts with oxidation gas (air, oxygen or gas enriched with oxygen) in order to produce the synthesis gas.

## Description

### TECHNICAL FIELD OF THE INVENTION

This invention relates to gasification and combustion of carbonic material, particularly relates to a method and apparatus for gasifying carbonic material through plasma decomposition obtained by microwave radiation in the carbonic material and where the synthesis gas is ultimately returned to the reactor to achieve its complete decomposition or purification.

### BACKGROUND OF THE INVENTION

The common gasification technologies, such as gasification through pyrolysis, operate at temperatures in the range of 400 °C to 1700 °C which can convert materials containing carbon, called carbonic material in a combustible gas called synthesis gas, composed primarily Carbon monoxide (CO) and hydrogen (H2). However, and due to the operating temperatures, total decomposition of the carbonic material is not achieved, and a contaminated synthesis gas is produced with a high level of volatile or semivolatile organic debris, acid sludge, slag, ashes, dioxins, furans, and levels of nitrogen oxides (NOx) and high sulfur oxides (SOx).

Another disadvantage of these gasification technologies is that many materials should be separated from the incoming waste flow before entering the reactor. The waste should be dried to an acceptable level of moisture and processed to achieve a uniform size and consistency, increasing costs and complexity.

One current solution to the disadvantages described above is the technology called plasma gasification, which involves the transformation of carbonic materials in an atmosphere low in oxygen using a powerful external source which generates an atmosphere or a cloud of plasma points, through which the carbonic material is passed to achieve its complete decomposition and produce a synthesis gas much cleaner, which can be used in many applications. Although the temperatures are much higher than those used in a gasification process by pyrolysis or incineration, the organic material will not burn because there is not enough oxygen.

Plasma is defined as a highly ionized gas matter, with an equal number of free positive and negative charges, commonly referred to as the fourth state of matter. The energy of the plasma, when in contact with any material is released and transmitted to the surface of the material achieving its decomposition.

In the plasma gasification, the amount of oxygen is controlled and only enough oxygen is allowed to exist to produce carbon monoxide. Carbonic matter is transformed into a synthetic fuel gas composed primarily of carbon monoxide (CO) and molecular hydrogen (H₂). The high temperatures of the plasma allow a definitive and irreversible dissociation of the molecular structures of the carbonic material in its basic compounds to produce a synthesis gas. The high temperatures of the plasma produce the following reactions:
- Thermal break. The complex molecules are dissociated into lighter molecules forming hydrocarbon gases and hydrogen.
- Partial oxidation: Favor the formation of carbon monoxide and accessories for small amounts of carbon dioxide and water. The latter two compounds resulting from complete oxidation reactions logically have a negative effect on the calorific value of the synthesis gas. It is, therefore, indispensable to control the input of oxygen into the reactor.
- Reformation: The primary elements are assembled into new molecules, for example, the reaction between carbon and water resulting in carbon monoxide and hydrogen, or between carbon dioxide and carbon to form carbon monoxide. These reactions favor the formation of an energetic gas and the presence in said energetic gas of oxidized components that reduce the calorific power of the synthesis gas.

The high temperatures of the plasma gasification process melt metals, glass, silica, soils, etc. Due to the high temperatures and the lack of oxygen, the levels of semivolatile organic wastes, acid sludges, dioxins and furans, and levels of nitrogen oxides (NOₓ) and sulfur oxides (SOₓ) are much lower.

Examples of the current embodiments of plasma gasification are described in the following patent documents:

Sven Santen and Björn Hammarskog in the Spanish patent ES-8400477, describes a method and apparatus for gasifying carbonic material, wherein the carbonic material is provided in the form of clods in a reactor in the form of a tank, The supplying is effected from the top to achieve a predetermined level of filling, then an oxidant gas or a gas containing oxygen and a thermal energy carrier gas is provided which was passed through a plasma generator. The oxidant gas and the thermal energy carrier gas is supplied on top of the surface of the carbonic material and the bottom of the tank below the outlet of the generated synthesis gas, this in order to decompose the carbonic material into monoxide carbon and hydrogen.

Sven Santén and Björn Hammarskog in the Spanish patent ES-8607374, describe a method for burning and partially gasifying carbonic material atomized by introducing an oxidant agent and the carbonic material in a reaction chamber while thermal energy is supplied through a plasma generator, where a stream of hot gas containing an oxidant agent is generated in a plasma generator, and introduced into the reaction chamber, and the carbonic material pulverized coal is introduced concentrically around the flow of hot plasma gas using a gas transport.

Salvador L. Camacho, in the patents US-5544597 and US-5634414 describes a system for gasifying carbonic material wherein the carbonic material is compacted to eliminate the air and water, and then provided to a reactor which has a plasma arc burner, which is used as a heat source to carry out the pyrolysis of the organic carbonic material, while the inorganic waste is disposed of as vitrified slag.

Robert T. Do and Gary L. Leatherman, in the publication of the international patent application WO-03018721, describes a method and apparatus for pyrolysis, gasification and vitrification of carbonic material plasma. The apparatus consists of a funnel shaped reactor with an upper section and a bottom section; wherein the lower section provides a catalytic carbon bed and the upper section provides a continuous bed of carbonic material. A plurality of plasma arc burners located at the bottom of the reactor and below the catalytic carbon bed warm up the bed of catalytic carbon and the bed of carbonic material, causing by the introduction of a pre-determined amount of oxygen or air enriched in oxygen in the lower section, the decomposition of the carbonic material into synthesis gas, molten metals, and vitrified wastes.

The methods and apparatus described in patent documents ES-8400477 and ES-8607374 aforementioned have the limitation that the synthesis gas produced is not fully purified at it presents levels, although low, of semivolatile organic wastes, acid sludge, dioxins, furans, nitrogen oxides (NOₓ) and sulfur oxides (SOₓ), and represents a transformation process of synthesis gas that is not very efficient as the carbonic material requires a special treatment prior to entering the reactor. This is because first it is necessary to pulverize the carbonic material, which is supplied to the reactor in combination of a carrier gas to form a cloud of particles of carbonic material which is reacted with a plasma cloud of points formed from the same or another gas separately, which leads only to the surface decomposition of the carbonic material, that is, the carbonic material particles are broken up from the outside to the inside, which is no guarantee of its complete decomposition, moreover, there is no control over the homogeneous mixture between the cloud of particles of carbonic material and the cloud of plasma points.

Contrarily to the apparatus and methods described in the patent docuemnts US-5544597, US-5634414, and WO-03018721 aforementioned present the limitation that the produced synthesis gas is also not fully purified, presenting levels, although low, of semivolatile organic wastes, acid sludges, dioxins, furans, nitrogen oxides (NOₓ) and sulfur oxides (SOₓ), and represent the transformation process into a synthesis gas that is not very efficient as the carbonic material requires a very special treatment prior to entering the reactor, or the creation of separate catalyst beds to promote the transformation. Additionally, there is no homogeneous formation of a cloud of plasma points throughout the entire volume of carbonic material, as plasma arc carbon burners are used that only allow, depending on their location in the reactor, focus the reaction on very specific areas of the carbonic material entering into contact with the plasma arc, and thus the synthesis gas produced tends to combine with the carbonic material that has not yet reacted, or that has not yet been in contact with the plasma arc, thus causing the synthesis gas collected to require further treatment for its purification.

According to the above, there is a need to provide a method and apparatus for plasma gasifying of carbonic material by microwave radiation to form a cloud of plasma points distributed from the interior to the exterior, and throughout the entire volume of the carbonic material content in the reactor and thus facilitating the complete decomposition of the carbonic material in a synthesis gas that is purified as it is recirculated or refed through the cloud of plasma points.

### SUMMARY OF THE INVENTION

In view of the above, and in order to obtain a solution for the limitations encountered, it is the aim of this invention to provide a method for gasifying carbonic material to produce carbon monoxide and hydrogen, the method comprising the steps of: (a) providing carbonic material; (b) heating by microwave radiation, the carbonic material provided until it forms a cloud of plasma points in the carbonic material; (c) causing the cloud of plasma points of carbonic material to react with superheated water vapour to produce a synthesis gas; and (d) purifying the produced synthesis gas by recirculating or refeeding it through the cloud of plasma points in the carbonic material, wherein it is broken up by microwave radiation of step (b) to achieve the generally complete transformation of the synthesis gas into carbon monoxide and hydrogen.

It is also the object of this invention to provide an apparatus for gasifying carbonic material to produce carbon monoxide and hydrogen, the apparatus has (a) means for providing carbonic material; (b) means for heating by microwave radiation, the carbonic material provided until it forms a cloud of plasma points in the carbonic material; (c) means for causing the cloud of plasma points of carbonic material to react with superheated water vapour to produce a synthesis gas; and (d) purifying the produced synthesis gas by recirculating or refeeding it through the cloud of plasma points in the carbonic material that is broken up to achieve the generally complete transformation of the synthesis gas into carbon monoxide and hydrogen.

### BRIEF DESCRIPTION OF THE FIGURES

The characteristic details of the present invention are described in the following paragraphs, together with the figures related to it, in order to define the invention, but not limiting the scope of it.

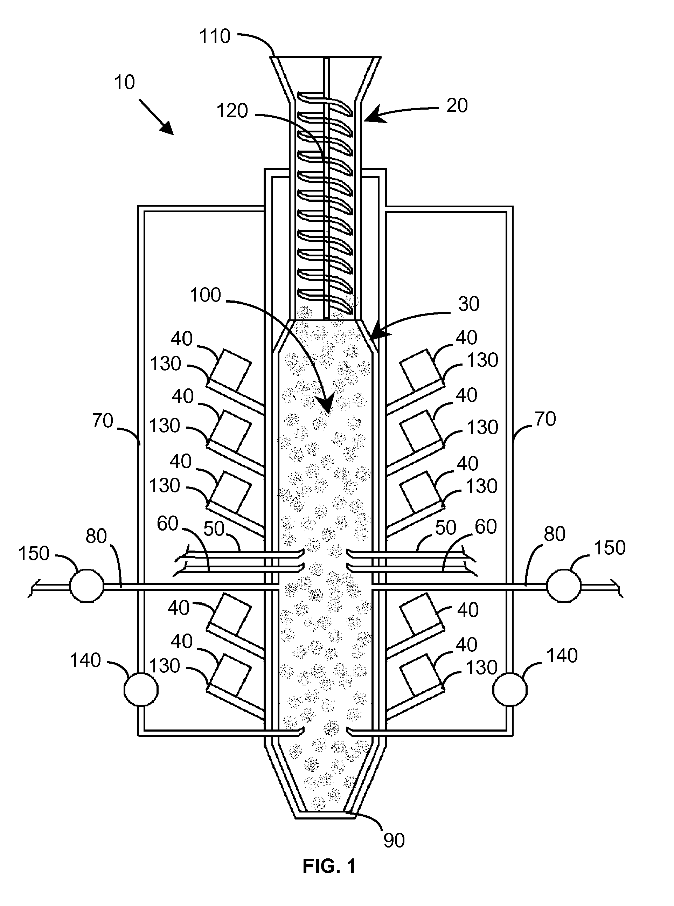

Figure 1 is a side view of an apparatus to gasify carbonic material according to the present invention.

### DETAILED DESCRIPTION OF THE INVENTION

Figure 1 is a side view of an apparatus to gasify carbonic material according to the present invention. The gasifying apparatus **10** comprises a feeder system **20,** a gasification chamber **30,** a plurality of microwave generators **40,** at least one water vapour feeder **50,** at least one oxidizing gas feeder **60,** at least one collector of synthesis gas **70,** at least one exit of the synthesis gas **80,** and an ejector of residuals **90.**

The feeder system **20** provides, in general in a continuous manner, the carbonic material **100** to the gasification chamber **30.** The feeder system **20** consists of a hopper **110** through which the carbonic material is introduced, followed by at least one mechanical feeder **120,** of a type for example, chain conveyors, screw auger feeder, gravity feeder, or combinations thereof, which allows continuously maintaining full or overfull, without surpassing, the gasification chamber **30** so that it always contains a compact mass of carbonic material **100.**

The carbonic material **100,** in the context of the invention is all that material which includes carbon in its composition can be selected from biomass, coal, hydrocarbon sludges, organic matter, and mixtures thereof.

The gasification chamber **30** is generally a cylindrical chamber placed on a slope or vertically, made of metallic material or ceramic coated non-metallic refractory material. The gasification chamber **30** may contain inside the carbonic material **100** supplied and the carbonic material **100** that is broken up.

The plurality of microwave generators **40** to radiate microwaves are arranged around and along the gasification chamber **30,** and each one includes at least one microwave guide **130** to direct and limit the radiation of microwaves inside the gasification chamber **30,** in particular the supplied carbonic material **100.** The microwave radiation, controlled and focused in the carbonic material **100** provokes that a cloud of plasma points distributed from the interior to the exterior, and throughout the entire volume of the carbonic material **100,** facilitating the complete decomposition of said carbonic material in a synthesis gas.

The water vapour feeder(s) **50** is (are) arranged, in this embodiment, in the central part of the gasification chamber **30,** however, they can be located anywhere along it, to provide a sufficient and constant quantity of superheated water vapour with a temperature from 500 °C to 800 °C to the cloud of plasma points of carbonic material to assist in its decomposition into synthesis gas. Each of the water vapour feeders **50** is directed into the interior of the gasification chamber **30** and consists of a nozzle that allows spreading the superheated water vapour throughout the volume of carbonic material **100** being gasified, and the cloud of plasma points of the carbonic material **100.** The nozzle is fed by a tube inside which the superheated water vapour is conducted, with a heating up to a temperature of 500 °C to 800 °C that can be achieved through a coil of tubing (not shown) that is in contact with and arranged around the gasification chamber **30** to use the heat generated by said chamber, and may serve as a cooling medium for it. The superheated water vapour can be fed with increased pressure to the interior of the gasification chamber **30** using turbo compressors (not shown).

The feeder(s) of the oxidation gas **60** is (are) arranged, in this embodiment, in the central part of the gasification chamber **30** along with the feeders of water vapour **50,** but can be located in any position along the chamber gasification **30,** in order to supply a sufficient and constant amount of air, oxygen or any other gas enriched with oxygen to the cloud of plasma points of the carbonic material that is being gasified to assist in its decomposition into synthesis gas. Each of the water vapour feeders **60** is directed into the interior of the gasification chamber **30** and consists of a nozzle that allows spreading the superheated water vapour throughout the volume of carbonic material **100** that is being gasified, and the cloud of plasma points of the carbonic material **100.** The nozzle is fed by a tube inside which the oxidation gas is conduced that is coming from a storage tank (not shown). The oxidation gas can be fed with increased pressure to the interior of the gasification chamber **30** using turbo compressors (not shown).

The synthesis gas produced in the gasification chamber **30** tends to travel in a natural way to the top of said gasification chamber where it is collected by at least one synthesis gas manifold **70** formed by a piping system. This tubing system allows conducing and introducing the synthesis gas to the bottom of the gasification chamber **30** in order to recirculate, or refeed the cloud of plasma points into the carbonic material **100,** thus achieving the complete dissociation of particles or molecules of unwanted compounds, and finally obtaining a purified synthesis gas. The synthesis gas can be recirculated or refed with increased pressure to the interior of the gasification chamber **30,** from the bottom part, using turbo compressors **140.**

The purified synthesis gas is expelled from the gasification chamber **30** via the synthesis gas exits **80,** located in this embodiment in the central part of the gasification chamber **30** and alternately expelled using turbo compressors **150.** The purified synthesis gas is then conduced to deposits for future treatments, or directly to the required application of combustion and power generation.

The carbonic material **100** is continuously consumed by the action of the plasma cloud, by the synthesis gas produced in ascending order, and the recirculated or refed synthesis gas, and it is continually fed by the feeder system **20** to maintain full or overfull, without surpassing, the gasification chamber **30** so that it always contains a compact mass of carbonic material **100** to be gasified. The temperature reached inside the gasification chamber **30** lays between 2000 °C to 5000 °C.

The wastes of carbonic material **100** that can not be gasified, for example metals, sands, and silicates tend to deposit in a natural way in the bottom of the gasification chamber **30** in the form of molten metals or inert vitrified slag, which are expelled and collected through the waste ejector **90** located at the bottom of the gasification chamber **30** and which may consist of manifuels and conveyors (not shown).

Based on Figure 1, the method for gasifying carbonic material can be summarized in the following stages:
(a) The carbonic material **100** is provided into the interior of a gasification chamber **30**;
(b) The carbonic material **100** is heated in the gasification chamber **30** through microwave radiation radiated by the microwave generators **40,** to form a cloud of plasma points in said carbonic material;
(c) The cloud of plasma points of the carbonic material **100** is made to react with the superheated water vapour and with the oxidation gas to produce a synthesis gas; and
(d) The synthesis gas is purified while recirculating or refeeding it through the cloud of plasma points in the carbonic material **100,** which is broken up by microwave radiation from step (b) to achieve the generally complete transformation of synthesis gas into carbon monoxide and hydrogen.

The conditions in the gasification chamber are, in essence, of a reduction type, since the conditions of a lack of or absence of oxygen favor the gasification process. The control variables are the feed rate of carbonic material, the energy consumption of the microwave generators, the flow of superheated water vapour and the flow of oxidation gas.

The chemical reactions achieved in the gasification chamber **30** are described hereunder:

The microwave radiation, controlled and focused in the carbonic material **100** provokes a continual cloud of plasma points distributed from the interior to the exterior, and throughout the entire volume of the carbonic material **100,** facilitating the complete decomposition of said carbonic material in a synthesis gas. This cloud of plasma points is formed by changing the state of the matter of molecules from solid to liquid, and from liquid to gases, and said gas with greater input of heat energy, as a product of the microwaves is ionized to the extent of becoming plasma provoking the molecular dissociation. The energy of each point of plasma when entering into contact with surrounding molecules of non-plasma carbonic material **100** is transmitted and also facilitates its dissociation.

The plasma cloud of carbonic material **100** and the surrounding molecules that are dissociated by said cloud, react with the superheated water vapour which is introduced by the feeders of water vapour **50,** and thus carbonic material remains submitted to the following reaction:

CxHy + H₂O = CO + CO₂ + H₂ (1)

Where:
CₓH_{y} represents any hydrocarbon; and
H₂O represents the superheated water vapour.

The formula (1) represents the main chemical reaction in the method for gasifying carbonic material of the invention. However, to optimize the chemical reaction inside the gasification chamber **30,** reduce the energy consumption of the microwave generators **40,** and thus increase the production of synthesis gas, the carbonic material **100** is also made to react with a controlled amount of oxidation gas (air, oxygen or any other gas enriched with oxygen) that is introduced in the gasification chamber **30** through the oxidation gas feeders **60** to support the following reactions:

CxHy + O₂ = 2CO + H₂ (2)

2C + O₂ = 2CO (3)

C + H₂O = CO + H₂ (4)

Where:
CₓH_{y} represents any hydrocarbon; and
H₂O represents the superheated water vapour;
O₂ is the oxidation gas; and
CO + H₂ represent the obtained synthesis gas.

The reactions shown in formulas (2) and (3) are exothermic, while the reactions of formulas (1) and (4) are, in principle, endothermic; this allows the energy inherent of the carbonic material, by this controlled oxidation reaction to increase the calorific value of gas to a higher output, producing greater amounts of synthesis gas (CO and H₂) and in order to reduce the energy consumption of the microwave generators **40** for reactions (1) and (4 ), that is, breaking the combination H₂O, with the cumulative result of an increased net production of energy.

The reaction according to formula (1) will take place in the gasification chamber **30** with the H₂O component, which is always part of the feeding of the carbonic material **100.** The H₂O molecule is naturally dissociated as a result of the contact with the ascending hot synthesis gas through the carbonic material **100,** and 2 H and O; then these atoms combine with atoms of the C-free carbonic material consumed **100** forming the highly stable (and desirable) CO and H₂ mixture (synthesis gas).

With the controlled input of oxidation gas (air, oxygen or any other gas enriched with oxygen) sufficient amounts of O₂ is made available to the gasification chamber **30** to generate the oxidation reactions (2) and (3) mentioned above, however, the amount of O₂ is not sufficient for the complete oxidation combustion reaction:

CₓH_{y} + O₂ = CO₂ + H₂O (5)

which takes place at much lower temperatures of the combustion process.

The controlled introduction of oxidizing gas (air, oxygen or any other gas enriched with oxygen) and the recirculation or feedback of the produced synthesis gas through the cloud of plasma points in the carbonic material **100** in the gasification chamber **30** for the development of the partially controlled oxidation reaction will generate the output synthesis gas at a higher thermic value, reducing the consumption of a specific energy, that is, the energy consumed by the microwave generators **40** when gasifying the carbonic material **100 .** This results in an increased production of net energy from the gasification of the carbonic material **100.** At the temperatures in the gasification chamber **30,** the following reaction (6) is moved completely to the left, so that the CO becomes the dominant carbon monoxide present:

CO + ½ O₂ = CO₂ (6)

The method for gasifying carbonic material of the current invention, by forming a cloud of plasma points in the carbonic material by microwave radiation with controlled injection of oxidation gas and superheated water vapour, and the recirculation or refeeding of the synthesis gas by the cloud of plasma points, and the inherent humidity in the carbonic material can produce an output synthesis gas with a composition containing at least 40% to 45% of H₂ and 40% to 45% of CO. Most of the output method for gasifying the carbonic material, according to this invention is in the form of synthesis gas, while the rest is the non-gasified carbonic material in the form of molten metals or an inert vitrified slag.

Finally it should be understood that the method and the apparatus for gasifying carbonic material of the present invention are not limited to the description above, and that experts in the field are trained by the teachings herein, to make changes and adjustments to the method and apparatus to gasify carbonic material of this invention, whose scope will be established only by the following claims:

## Claims

1. A method for gasifying carbonic material to produce carbon monoxide and hydrogen, the method is **characterized by** comprising the steps of:
(a) providing carbonic material;
(b) heating by microwave radiation, the carbonic material provided until it forms a cloud of plasma points in the carbonic material;
(c) causing the cloud of plasma points of carbonic material to react with superheated water vapour to produce a synthesis gas; and
(d) purifying the produced synthesis gas by recirculating or refeeding it through the cloud of plasma points in the carbonic material, wherein it is broken up by microwave radiation of step (b) to achieve the generally complete transformation of the synthesis gas into carbon monoxide and hydrogen.

2. The method of claim 1, **characterized in that** the carbonic material is selected from a group consisting of biomass, coal, hydrocarbon sludges, organic matter, and mixtures thereof.

3. The method of claim 1, **characterized in that** the superheated water vapour has a temperature range between 500 °C to 800 °C.

4. The method of claim 1, **characterized in that** the step of causing the cloud of plasma points of carbonic material to react with superheated water vapour to produce a synthesis gas, including the step of collecting the produced synthesis gas.

5. The method of claim 1, **characterized in that** the step of causing the cloud of plasma points of carbonic material to react with superheated water vapour to produce a synthesis gas, including the step of reacting of the cloud of plasma points with oxidation gas.

6. The method of claim 5, **characterized in that** the oxidation gas is selected from a group consisting of air, oxygen, and gases enriched with oxygen.

7. The method of claim 1, **characterized in that** the step of purifying the produced synthesis gas by recirculating or refeeding it through the cloud of plasma points in the carbonic material, wherein it is broken up by microwave radiation of step (b) to achieve the generally complete transformation of the synthesis gas into carbon monoxide and hydrogen, including the step of collecting the mixture of carbon monoxide and hydrogen.

8. An apparatus for gasifying carbonic material to produce carbon monoxide and hydrogen, the apparatus is **characterized by** comprising:
(a) means for providing carbonic material;
(b) means for heating by microwave radiation, the carbonic material provided until it forms a cloud of plasma points in the carbonic material;
(c) means for causing the cloud of plasma points of carbonic material to react with superheated water vapour to produce a synthesis gas; and
(d) purifying the produced synthesis gas by recirculating or refeeding it through the cloud of plasma points in the carbonic material that is broken up to achieve the generally complete transformation of the synthesis gas into carbon monoxide and hydrogen.

9. The apparatus of claim 8, **characterized in that** the means for providing carbonic material comprising:
a hopper; and
at least one mechanical feeder selected from a group consisting of conveyor chains, an auger screw feeder, a feeder by gravity, or combinations thereof.

10. The apparatus of claim 8, **characterized in that** the means for heating by microwave radiation, the carbonic material provided until it forms a cloud of plasma points in the carbonic material comprising:
a gasification chamber, metal or of coated non-metallic refractory material, the chamber containing within it the provided carbonic material and carbonic material being broken up by the cloud of plasma points;
a plurality of microwave generators arranged around the gasification chamber to radiate microwaves; and
a least one microwave guide arranged in each microwave generator to direct and limit the radiation of the microwaves inside the gasification chamber, in particular into the provided carbonic material.

11. The apparatus of claim 8, **characterized in that** the means for causing the cloud of plasma points of carbonic material to react with superheated water vapour to produce a synthesis gas, comprising a plurality of water vapour feeders that feed the superheated water vapour into the carbonic material, which is being broken up by the cloud of plasma points.

12. The apparatus of claim 8, **characterized in that** further including means for causing the cloud of plasma points of the carbonic material to react with oxidation gas to produce the synthesis gas.

13. The apparatus of claim 12, **characterized in that** the oxidation gas is selected from a group consisting of air, oxygen, and gases enriched with oxygen.

14. The apparatus of claim 12, **characterized in that** the means for causing the cloud of plasma points of the carbonic material to react with oxidation gas to produce the synthesis gas, comprising a plurality of water vapour feeders that feed the oxidation gas into the carbonic material that is being broken up by the cloud of plasma points.

15. The apparatus of claim 8, **characterized in that** further comprising a plurality of synthesis gas manifold collectors to collect the synthesis gas that is produced.

16. The apparatus of claim 8, **characterized in that** the carbonic material is selected from a group consisting of biomass, coal, hydrocarbon sludges, organic matter, and mixtures thereof.

17. The apparatus of claim 8, **characterized in that** the superheated water vapour has a temperature range between 500 °C to 800 °C.

18. The apparatus of claim 8, **characterized in that** further comprising means for the output of the purified synthesis gas.

19. The apparatus of claim 8, **characterized in that** further comprising an expeller of wastes to expel and collect wastes of the carbonic material that cannot be gasified.

20. The apparatus of claim 19, **characterized in that** the wastes of the carbonic material that cannot be gasified are output as molten metals and vitrified slag.
